Europäisches Patentamt

European Patent Office

Office européen des brevets

(19)

(11) Numéro de publication : **0 173 781**
**B1**

(12) # FASCICULE DE BREVET EUROPÉEN

(45) Date de publication du fascicule du brevet :
05.04.89

(21) Numéro de dépôt : 84401764.0

(22) Date de dépôt : 05.09.84

(51) Int. Cl.⁴ : **C 08 L 23/12**, C 08 L 29/04, C 08 K 7/20

(54) Composition thermoplastique pour la fabrication d'articles moulés et son procédé de mise en oeuvre.

(43) Date de publication de la demande :
12.03.86 Bulletin 86/11

(45) Mention de la délivrance du brevet :
05.04.89 Bulletin 89/14

(84) Etats contractants désignés :
AT BE CH DE GB IT LI LU NL SE

(56) Documents cités :
EP-A- 0 041 747
FR-A- 2 223 409
FR-A- 2 390 263
SPE-JOURNAL, SOCIETY OF PLASTICS ENGINEERS, vol. 25, no. 9, septembre 1969, pages 38-43, Greenwich, Connecticut, US; O.R. STRAUCH: "Spherical glass fillers"
CHEMICAL ABSTRACTS, vol. 85, no. 8, 23 août 1976, page 41, colonne 2, no. 47623a, Columbus, Ohio, US

(73) Titulaire : **Dromigny, Pierre**
**54, avenue de Versailles**
**F-75016 Paris (FR)**

(72) Inventeur : **Leconte, Christian**
**Les Hauts de Valescure La Tour**
**F83700 Saint Raphael (FR)**

(74) Mandataire : **Bonnetat, Christian et al**
**Cabinet PROPI Conseils 23 rue de Léningrad**
**F-75008 Paris (FR)**

# EP 0 173 781 B1

## Description

La présente invention concerne une composition de matériau composite présentant des caractéristiques thermoplastiques permettant la fabrication d'articles par moulage, le matériau étant amené par effet thermique à un état physique malléable permettant sa conformation selon les formes voulues et en utilisant les techniques de thermoformage, injection, extrusion soufflage et généralement les techniques de conformation de matériaux thermoplastiques pour les amener à la forme appropriée.

On connaît diverses compositions à base de matériaux polymérisés présentant des propriétés thermoplastiques et présentées sous forme de granulés ; ces granulés peuvent être mis en place dans une boudineuse à vis d'Archimède dont la mise en rotation, s'accompagnant d'une élévation thermique du matériau, amène ce dernier à l'état physique approprié permettant, soit par extrusion, soit par injection dans un moule, la mise en forme de doses successives de matières qui par refroidissement permettent d'obtenir les objets de dimensions et formes voulues.

Les matériaux utilisés pour leurs propriétés thermoplastiques présentent chacun des avantages et des inconvénients spécifiques.

La présente invention vise une composition synergétique présentant des caractéristiques nouvelles et remarquables pour la réalisation d'objets divers de formes complexes notamment d'objets réalisés par injection et comportant une surface de faible épaisseur, présentant par ailleurs une conformation leur permettant de jouer le rôle de conteneurs pour des usages appropriés.

Le matériau selon l'invention présente des caractéristiques globales et la somme d'un certain nombre de particularités qui, jusqu'à présent, n'avaient pu être réunies ou réalisées avec l'efficacité souhaitée.

A cette fin, selon l'invention, le matériau composite de caractéristiques thermoplastiques, propre à la fabrication par moulage d'objets divers, est caractérisé par la composition suivante exprimée en pourcentage pondéral :

| | |
|---|---|
| polypropylène | 40 à 80 % |
| billes de verre | 5 à 40 % |
| alcool polyvinylique (EVAL) | 5 à 60 % |

et en ce que les billes de verre ont une dimension granulométrique comprise entre 1 et 10 $\mu$m.

On remarquera que le document SPE Journal, Society of Plastics Engineers, Vol. 25, no 9, Septembre 1969, pages 38-43, Greenwich, Connecticut, US, O.R. Strauch « Spherical glass fillers » décrit déjà l'usage de billes de verre pour renforcer les matériaux thermoplastiques et les matériaux thermodurcissables. Cependant, dans ce document, on recommande l'utilisation de billes de verre dont le diamètre moyen est de 30 $\mu$m.

La résistance physique aux chocs améliorée du matériau selon l'invention résulte de son homogénéité physique remarquable, elle-même due à la faible dimension granulométrique des billes de verre. L'utilisation de billes de verre ayant un diamètre moyen de 30 $\mu$m ne pourrait que nuire à l'homogénéité physique du matériau composite comportant de plus du polypropylène et de l'alcool polyvinylique (EVAL) et, donc, amoindrir la résistance physique aux chocs d'un tel matériau.

On remarquera de plus que le brevet EP-A-41 747 envisage une composition pondérale contenant 60 à 95 % de polypropylène et 5 à 40 % d'alcool polyvinylique (EVAL).

De préférence, le matériau composite selon l'invention est caractérisé en ce qu'il répond à la composition pondérale suivante :

| | |
|---|---|
| polypropylène | entre 50 et 60 % et |
| de préférence | 55 % |
| billes de verre | de 5 à 15 % et |
| de préférence | 11 % |
| alcool polyvinylique (EVAL) | de 25 à 40 % et |
| de préférence | 33 % |

L'invention concerne également un procédé de préparation du matériau composite ci-dessus et caractérisé en ce que l'on forme un mélange de 40 à 80 % de polypropylène et de 20 à 40 % de billes de verre présentant une granulométrie comprise entre 1 et 10 $\mu$m et ce mélange est traité dans une boudineuse de type connu et extrudé pour être mis en granulés de mélange polypropylène/billes de verre, ces granules étant à leur tour remélangés avec des granulés de polypropylène pur et des granules d'alcool polyvinylique (EVAL) selon les pourcentages indiqués précédemment.

De préférence, dans le cadre du procédé ci-dessus, les granulés de mélange polypropylène/billes de verre sont préparés à partir d'une proportion pondérale de deux parts de polypropylène et d'une part de billes de verre.

L'invention concerne ainsi également un matériau complexe de propriétés thermoplastiques pour la préparation d'articles obtenus par moulage et correspondant à la définition suivante :

un tiers de granulés de polypropylène pur

un tiers de granulés d'un mélange comportant 66 % de polypropylène et 33 % de billes de verre de granulométrie comprise entre 1 et 10 μm.

un tiers de granulés d'alcool polyvinylique (EVAL).

L'invention concerne encore un procédé de préparation d'articles moulés et caractérisés en ce que l'on moule par injection l'article à partir d'un matériau composite correspondant aux caractéristiques ci-dessus.

L'invention concerne enfin les articles moulés obtenus par injection à partir du matériau selon les caractéristiques précédemment définies.

Le matériau mis en œuvre dans le cadre de la présente invention présente une grande inertie thermique qui lui permet notamment une bonne tenue aux conditions de température extrêmes allant jusqu'à 160 °C.

Ces propriétés sont alliées de façon nouvelle à des caractéristiques physiques d'étanchéité aux gaz, et notamment à la vapeur d'eau.

Dans ces conditions, le matériau selon l'invention, peut être avantageusement utilisé pour la réalisation de conteneurs destinés à subir des conditions thermiques sévères, par exemple des conteneurs permettant des traitements thermiques de pasteurisation, voire de stérilisation.

Ces propriétés proviennent du mélange synergétique des caractéristiques des différents éléments intervenant dans la combinaison nouvelle qui, par ailleurs, présente une homogénéité physique remarquable lui permettant d'assurer une bonne résistance physique aux chocs.

Les produits obtenus par la mise en œuvre du matériau selon l'invention, peuvent être ainsi réalisés par les techniques de mises en forme classiques de matériaux thermoplastiques, notamment dans des machines d'injection utilisant des moules de formes appropriées et dans les conditions identiques à celles utilisées pour les matériaux thermoplastiques conventionnels.

On obtient ainsi grâce à l'utilisation des techniques courantes, des produits fabriqués en série et de faible prix de revient.

Le matériau composite étant homogène peut être recyclé à l'intérieur de la phase de fabrication avec récupération des chutes, ce qui permet un abaissement du coût de fabrication et par conséquent du prix de revient.

L'homogénéité du produit lui permet également d'éviter les problèmes liés à la liaison des éléments coextrudés par exemple sous forme de feuilles complexes.

Le matériau utilisé dans le cadre de l'invention peut encore recevoir, dans les conditions classiques, les techniques de décoration, entre autre par impression superficielle après refroidissement, ou par surmoulage lors de l'injection d'un décor pré-imprimé.

Le matériau selon l'invention, grâce à ses propriétés nouvelles et originales de résistance aux températures, permet donc de réaliser des emballages et conteneurs à compatibilité alimentaire et aptes à recevoir des produits en conserve ou ayant la nature de semi-conserves.

La tenue du produit dans le temps lui permet en effet de supporter un cycle de péremption dépassant largement une année.

Les conteneurs réalisés à partir du matériau selon l'invention pourront être refermés par des opercules en matériau identique à celui du conteneur, selon les techniques courantes, ou être refermés par une feuille d'aluminium pourvue sur une face d'une laque convenablement choisie pour sa compatibilité avec le matériau de l'invention, afin de permettre le scellement de ladite feuille d'aluminium sur les bords du conteneur, tout en assurant une bonne pelabilité.

Dans le domaine médical l'invention sera également utilisée de façon remarquablement avantageuse pour la réalisation de seringues aptes à remplacer des seringues en verre qui doivent être stérilisées, ou qui sont préremplies avec un médicament et donc doivent être étanches aux gaz.

On a décrit ci-après un exemple de mise en œuvre de l'invention pour la réalisation d'une seringue stérilisable et pouvant également être pré-remplie.

On a préparé dans un premier temps un premier jeu de granulés de mélange ou « compound » à partir d'un pourcentage pondéral de 30 % de billes de verre, de granulométrie comprise entre 2 et 5 μm et 70 % de granulés de polypropylène. Ce mélange a été introduit dans une boudineuse et extrudé sous forme de joncs puis sectionné transversalement par les techniques habituelles, pour obtenir des granulés d'un « compound » dont la composition répond à la composition du mélange initial, à savoir 30 % de billes de verre et 70 % de polypropylène.

Ces granulés de mélange ont été utilisés pour réaliser la composition finale dans les conditions suivantes.

On a utilisé une part de granulés du mélange précédent, une part de granulés de polypropylène pur et une part de granulés d'alcool polyvinylique (EVAL).

Les trois parts ont été, après homogénéisation, introduites dans une machine à injection de type connu apte à injecter dans un moule de forme appropriée le matériau composite thermoplastique précédemment défini.

On obtient ainsi, en utilisant une machine d'injection et un moule conventionnel et approprié, des seringues présentant des propriétés remarquables à l'usage.

Les seringues sont incassables tout en présentant la rigidité et la résistance mécanique nécessaires.

Ces seringues produites par grande série, en grande quantité, peuvent être d'un prix de revient particulièrement faible et avantageux.

Et surtout les seringues ainsi réalisées pouvant supporter une élévation thermique dépassant 140 °C, sont donc susceptibles d'être soumises à stérilisation dans l'eau bouillante et présentent une bonne étanchéité à l'oxygène.

On peut réaliser dans les mêmes conditions des récipients et conteneurs de dimensions variant entre quelques centilitres et un litre ou plus et aptes à contenir des produits alimentaires de conservation étendue sur plusieurs mois.

Les essais et expérimentations auxquels il a été procédé par la société demanderesse ont permis de vérifier les caractéristiques du produit ainsi réalisé en ce qui concerne sa tenue à la stérilisation, sa perméabilité à l'oxygène et son comportement dans des conditions thermiques sévères.

On a soumis ainsi pour essais à la tenue à stérilisation un lot de boîtes cylindriques en matière plastique injectée réalisées à partir du matériau selon l'invention.

L'essai de tenue à la stérilisation a été réalisé de la façon suivante

a — température 130° ± 1 °C sans humidité
durée : 3 h.
b — température 125 °C ± 1 dans la vapeur d'eau saturante
durée : 3 h.

On a observé les éventuelles déformations par mesure de différentes cotes avant et après stérilisation (mesures au pied à coulisse au 5/100). Essai effectué sur deux boîtes par type d'essai.

On a relevé les mesures par boîte sur les côtés relevés au niveau de deux diamètres perpendiculaires, respectivement :

diamètre hors tout supérieur
diamètre extérieur du fond
hauteur hors tout.

Le résultat des mesures est repris sur les tableaux 1 et 2 annexés.

On a également procédé à des essais de perméabilité à l'oxygène sur la base d'éprouvettes réalisées sous forme de barquettes en matière thermoplastique conformes aux caractéristiques de l'invention.

La mesure de la perméabilité des récipients a été faite à l'aide d'un appareil OXTRAN 100 selon la méthode suivante :

Le récipient est collé sur une plaque métallique à l'aide d'une résine époxyde. Cette plaque métallique est connectée à l'appareil par deux tuyauteries. Ces dernières permettent le balayage de l'intérieur du récipient par un gaz vecteur (azote) et l'appareil mesure la pollution du gaz vecteur par l'oxygène de l'air extérieur ayant migré à travers le corps du récipient.

Les conditions particulières de l'essai étaient les suivantes :

| | |
|---|---|
| Essai dans l'air ambiant | 21 % d'oxygène |
| Température | 20 °C |
| Nombre d'échantillons essayés | 3 barquettes selon l'invention |
| | 3 barquettes témoin |

Les résultats sont les suivants :

| | |
|---|---|
| barquettes de l'invention | 1-de l'ordre de 0,001 |
| | 2-de l'ordre de 0,002 |
| | 3-0,020 |
| barquettes témoin | 1-0,030 |
| | 2-0,030 |
| | 3-0,032 |

On a enfin procédé à un examen de l'inertie d'un conteneur réalisé à partir du matériau selon l'invention et devant entrer en contact avec les aliments afin d'étudier son comportement dans des conditions thermiques sévères.

L'essai a été conduit pendant 1 heure à 100° respectivement dans de l'eau distillée et de l'huile de tournesol et a permis de constater l'inertie des récipients pour recevoir des aliments versés chauds, tout comme pour subir les phases thermiques liées à la pasteurisation ou la stérilisation des aliments.

Les essais ont conduit aux observations suivantes :

| Essais :1 heure à 100°C dans : | eau distillée | Huile de tournesol |
|---|---|---|

Observations sur les éprouvettes: Aucune modification apparente
Observations sur le milieu      : Limpide,SANS goût ni odeur
Migration globale en mg/dm2     :      0,9         |      9,6

Tableau 1

| Essai | | | Avant | Après |
|---|---|---|---|---|
| 130°C sec | boîte 1 | Ø sup | 91,0 mm | 90,3 mm |
| | | | 91,1 | 90,0 |
| | | Ø inf | 84,3 | 83,3 |
| | | | 84,2 | 83,2 |
| | | h | 39,11 | 38,85 |
| | | | 39,0 | 38,7 |
| | boîte 2 | Ø sup | 91,0 | 90,0 |
| | | | 91,1 | 90,3 |
| | | Ø inf | 84 | 83,65 |
| | | | 84,3 | 83,7 |
| | | h | 39 | 38,7 |
| | | | 39 | 38,7 |

Tableau 2

| Essai | | | Avant | Après |
|---|---|---|---|---|
| 125°C humide | boîte 1 | Ø sup | 90,4 | 89,5 |
| | | | 91,0 | 89,4 |
| | | Ø inf | 84,3 | 83,4 |
| | | | 83,8 | 83,1 |
| | | h | 39,0 | 38,65 |
| | | | 39,0 | 38,6 |
| | boîte 2 | Ø sup | 90,9 | 90,6 |
| | | | 90,8 | 89,1 |
| | | Ø inf | 84,0 | 83,5 |
| | | | 84,2 | 83,5 |
| | | h | 38,9 | 38,5 |
| | | | 39,0 | 38,8 |

## Revendications

1. Matériau composite de caractéristiques thermoplastiques, propre à la fabrication par moulage d'objets divers, caractérisé par la composition suivante exprimée en pourcentage pondéral :

| | |
|---|---|
| polypropylène | 40 à 80 % |
| billes de verre | 5 à 40 % |
| alcool polyvinylique (EVAL) | 5 à 60 % |

et en ce que les billes de verre ont une dimension granulométrique comprise entre 1 et 10 μm.

2. Matériau composite selon la revendication 1, caractérisé en ce qu'il répond à la composition pondérale suivante :

| | |
|---|---|
| polypropylène | entre 50 et 60 % et |
| de préférence | 55 % |
| billes de verre | de 5 à 15 % et |
| de préférence | 11 % |
| alcool polyvinylique (EVAL) | de 25 à 40 % et |
| de préférence | 33 % |

3. Procédé de préparation du matériau composite selon la revendication 1 ou la revendication 2, caractérisé en ce que l'on forme un mélange de 40 à 80 % de polypropylène et de 20 à 40 % de billes de verre présentant une granulométrie comprise entre 1 et 10 μm et ce mélange est traité dans une boudineuse de type connu et extrudé pour être mis en granulés de mélange polypropylène/billes de verre, ces granulés à leur tour remélangés avec des granulés de polypropylène pur et des granulés d'alcool polyvinylique (EVAL) selon les pourcentages conformes à l'une des revendications 1 à 2 ci-dessus.

4. Procédé selon la revendication 3, caractérisé en ce que les granulés de mélange polypropylène/billes de verre sont préparés à partir d'une proportion pondérale de deux parts de polypropylène et d'une part de billes de verre.

5. Matériau complexe de propriétés thermoplastiques selon la revendication 1 ou la revendication 2 ci-dessus et destiné à la préparation d'articles obtenus par moulage, caractérisé par la composition suivante :

un tiers de granulés de polypropylène pur
un tiers de granulés d'un mélange comportant 66 % de polypropylène et 33 % de billes de verre de granulométrie comprise entre 1 et 10 μm
un tiers de granulés d'alcool polyvinylique (EVAL).

6. Procédé de préparation d'articles moulés et, caractérisé en ce que l'on moule par injection l'article à partir d'un matériau composite correspondant aux caractéristiques définies dans l'une des revendications 1, 2 ou 5 ci-dessus.

7. Articles moulés obtenus par injection à partir du matériau conforme à l'une des revendications 1, 2 ou 5 ci-dessus.

8. Articles moulés obtenus par injection en utilisant le procédé selon l'une des revendications 3, 4 ou 6 ci-dessus.

## Claims

1. Composite material having thermoplastic characteristics adapted for the manufacture by moulding of different objects, characterized by the following composition expressed in weight percent :

| | |
|---|---|
| polypropylène | 40 to 80 % |
| glass beads | 5 to 40 % |
| polyvinylic alcohol (EVAL) | 5 to 60 % |

and in that the glass beads have a particle size comprised between 1 and 10 μm.

2. Composite material according to claim 1, characterized by the following composition expressed in weight percent :

| | |
|---|---|
| polypropylene | between 50 and 60 % |
| and preferably | 55 % |
| glass beads | from 5 to 15 % and |
| preferably | 11 % |
| polyvinylic alcohol (EVAL) | from 25 to 40 % and |
| preferably | 33 % |

3. Process for manufacturing the composite material according to claim 1 or claim 2, characterized in that a blend of 40 to 80 % of polypropylene and 20 to 40 % of glass beads, the particle size of which is comprised between 1 and 10 µm, is formed, and the blend is treated in a blender known per se and extruded to be pelletized in the form of granules of polypropylene/glass beads blend, these granules are in turn remixed with granules of pure polypropylene and granules of polyvinylic alcohol (EVAL) in percents in accordance with one of claims 1 or 2 above.

4. Process according to claim 3, characterized in that the granules of the polypropylene/glass beads blend are prepared from a weight proportion of two parts of polypropylene and one part of glass beads.

5. Complex material having thermoplastic properties according to claim 1 or claim 2 above, and intended to preparing articles obtained by moulding, characterized by the following composition :

one third of granules of pure polypropylene
one third of granules of a blend comprising 66 % of polypropylene and 33 % of glass beads having a particle size comprised between 1 and 10 µm
one third of granules of polyvinylic alcohol (EVAL).

6. Process for preparing moulded articles, characterized in that the article is moulded by injection from a composite material corresponding to the characteristics defined in one of claims 1, 2 or 5 above.

7. Moulded articles obtained by injection from a material in accordance with one of claims 1, 2 or 5 above.

8. Moulded articles obtained by injection utilizing the process according to one of claims 3, 4 or 6 above.

**Patentansprüche**

1. Thermoplastische Zusammensetzung zur Herstellung verschiedener Gegenstände durch Formung, gekennzéichnet durch folgende Gewichtsanteile :

| | |
|---|---|
| Polypropylen | 40 bis 80 % |
| Glaskugeln | 5 bis 40 % |
| Polyvinylalkohol (EVAL) | 5 bis 60 % |

und dadurch, daß die Glaskugeln eine Körnung zwischen 1 und 10 µm aufweisen.

2. Zusammensetzung nach Anspruch 1, dadurch gekennzeichnet, daß sie die folgenden Gewichtsanteile aufweist :

| | |
|---|---|
| Polypropylen | zwischen 50 und 60 % und |
| vorzugsweise | 55 % |
| Glaskugeln | von 5 bis 15 % und |
| vorzugsweise | 11 % |
| Polyvinylalkohol (EVAL) | von 25 bis 40 % und |
| vorzugsweise | 33 % |

3. Verfahren zur Herstellung der Zusammensetzung nach Anspruch 1 oder 2, dadurch gekennzeichnet, daß man ein Gemisch aus 40 bis 80 % Polypropylen und 20 bis 40 % Glaskugeln mit einer Körnung zwischen 1 und 10 µm herstellt und dieses Gemisch sodann in einer Strangpresse bekannten Typs behandelt und extrudiert und dadurch zu einem Polypropylen/Glaskugel-Granulat verarbeitet und daß sodann dieses Granulat wieder mit reinem Polypropylen-Granulat und Polyvinylalkohol (EVAL)-Granulat nach den Gewichtsangaben gemäß einem der oben stehenden Ansprüche 1 oder 2 vermischt wird.

4. Verfahren nach Anspruch 3, dadurch gekennzeichnet, daß das Mischgranulat Polypropylen/Glaskugeln mit einem Gewichtsverhältnis von zwei Teilen Polypropylen und einem Teil Glaskugeln hergestellt wird.

5. Zusammengesetzter Kunststoff mit thermoplastischen Eigenschaften nach Anspruch 1 oder 2 zur Herstellung von Gegenständen durch Formung, gekennzeichnet durch die folgende Zusammensetzung :

1/3 Granulat aus reinem Polypropylen
1/3 Granulat aus einer Mischung von 66 % Polypropylen und 33 % Glaskugeln mit einer Körnung zwischen 1 und 10 µm
1/3 Granulat aus Polyvinylalkohol (EVAL).

6. Verfahren zur Herstellung von geformten Gegenständen, dadurch gekennzeichnet, daß man den Gegenstand durch Einspritzen formt aus einer Werkstoffzusammensetzung nach einem der Ansprüche 1, 2 oder 5.

7. Aus einem Kunststoff nach einem der Ansprüche 1, 2 oder 5 gespritzter Gegenstand.

8. Geformter Gegenstand, der durch Spritzen unter Anwendung des Verfahrens nach einem der Ansprüche 3, 4 oder 6 hergestellt worden ist.